## Europäisches Patentamt
## European Patent Office
## Office européen des brevets

(19)

(11) Veröffentlichungsnummer : **0 076 977**
**B1**

(12) # EUROPÄISCHE PATENTSCHRIFT

(45) Veröffentlichungstag der Patentschrift :
13.06.84

(51) Int. Cl.³ : **C 02 F 3/08**

(21) Anmeldenummer : **82109045.3**

(22) Anmeldetag : **30.09.82**

(54) **Vorrichtung zur Abwasserreinigung.**

(30) Priorität : **10.10.81 DE 3140372**

(43) Veröffentlichungstag der Anmeldung :
**20.04.83 Patentblatt 83/16**

(45) Bekanntmachung des Hinweises auf die Patenterteilung : **13.06.84 Patentblatt 84/24**

(84) Benannte Vertragsstaaten :
**AT BE CH DE FR GB IT LI LU NL SE**

(56) Entgegenhaltungen :
**DE-A- 1 956 728**
**DE-A- 2 911 975**
**DE-A- 2 914 689**
**DE-A- 2 952 691**
**GB-A- 2 043 044**

(73) Patentinhaber : **Stähler, Theo**
**Mühlenhof**
**D-6253 Hadamar-Niederzeuzheim (DE)**

(72) Erfinder : **Randolph, Volker**
**Wilhelm-Busch-Weg 21**
**D-3320 Salzgitter 51 (DE)**
Erfinder : **Scheibinger, Ludwig**
**Alfonsstrasse 7**
**D-8000 München 19 (DE)**
Erfinder : **Stähler, Theo**
**Mühlenhof**
**D-6253 Hadamar-Niederzeuzheim (DE)**
Erfinder : **Spanich, Bruno**
**Dorfstrasse 9**
**D-3321 Altwallmoden (DE)**

(74) Vertreter : **Kosel, Peter, Dipl.-Ing. et al**
**Patentanwälte Dipl.-Inge. Röse, Kosel & Sobisch**
**Odastrasse 4a Postfach 129**
**D-3353 Bad Gandersheim 1 (DE)**

EP 0 076 977 B1

## Beschreibung

Die Erfindung betrifft eine Vorrichtung für die aerobe biologische Reinigung von Abwässern nach dem kombinierten Tauchtropfkörper-Belebungsverfahren gemäß dem Oberbegriff des Anspruchs 1.

Bei einer bekannten Vorrichtung dieser Art (DE-Offenlegungsschrift 29 11 975) ist die Haltekonstruktion jeweils genau auf Länge als stählernes Gehäuse zur Aufnahme der Bewuchskörperpakete gefertifgt. Die Umsetzungskammern erstrecken sich jeweils über die gesamte axiale Länge des Tauchtropfkörpers und sind über den Umfang des Tauchtropfkörpers sektorartig verteilt. Eine hohle Welle des Tauchtropfkörpers bildet die inneren Wände der Umsetzungskammern. Achsparallele radiale Trennwände zwischen und achsparallele radiale Leitwände in den Umsetzungskammern bestehen aus Blech und sind einerseits mit der Welle und andererseits mit geschlossenen Stirnwänden des Tauchtropfkörpers dicht verschweißt. Auch die äußeren Wände der Umsetzungskammern sind aus Blech und an den Trennwänden und Stirnwänden dicht befestigt. Montage und Demontage der Bewuchskörperpakete sind verhältnismäßig umständlich. Unwirtschaftlich ist die jeweils erforderliche Maßanfertigung der stählernen Haltekonstruktion für die Bewuchskörperpakete. Die Strömungsverhältnisse für Abwasser und Luft sind in dem Tauchtropfkörper noch nicht optimal. Insbesondere wird die unter Wasser mitgenommene Luft noch nicht mit größtmöglicher Oberfläche ausgenutzt. Dies ist zum Teil darauf zurückzuführen, daß die Zwischenräume zwischen benachbarten Bewuchskörpern nicht gegeneinander abgedichtet sind.

Aus der DE-Offenlegungsschrift 29 14 689 sind für Tauchtropfkörper der eingangs erwähnten Art Bewuchskörper mit besonderen Abstandselementen und Mittel zur Festlegung der Bewuchskörperpakete und der Haltekonstruktion an sich bekannt.

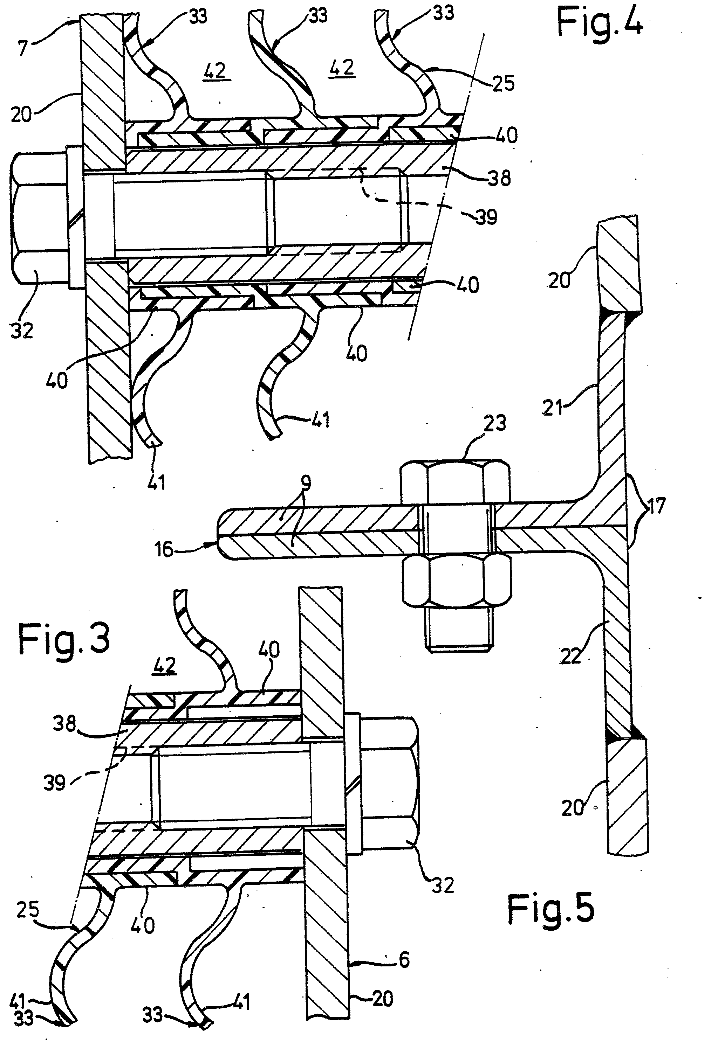

Aus der GB-Offenlegungsschrift 2 043 044 ist es an sich bekannt, jeden Bewuchskörper kompliziert aus einer an einer Nabe befestigten Hauptscheibe, einer in axialem Abstand davon angeordneten Nebenscheibe, die mit der Nabe eine ringförmige Saugöffnung definiert, und aus die beiden Scheiben miteinander verbindenden, von der Nabe ausgehenden Flügeln aufzubauen. Die Bewuchskörper können auch sektorförmig und doppelscheibig ausgebildet und dann durch einen achsnahen axialen Fortsatz im Abstand voneinander gehalten sein. In jedem Fall ist eine Umsetzungskammer zwischen den beiden Scheiben jedes Bewuchskörpers ausgebildet. Es handelt sich hier um einen Tauchtropfkörper, der nicht in Kombination mit dem Belebungsverfahren betrieben wird und nur zu seinem kleineren Teil in das Abwasser eintaucht. Die Bewuchskörper wirken als Zentrifugalflügelräder. Die sektorförmigen Bewuchskörperpakete sind gemäß Fig. 5 um eine Welle herum zwischen Speichen aufweisenden, radartigen Stirnelementen angeordnet, die durch starre achsparallele Traversen miteinander verbunden sind.

Der Erfindung liegt die Aufgabe zugrunde, den Tauchtropfkörper konstruktiv und baulich zu vereinfachen, sein Gewicht zu senken und im Baukastenprinzip unterschiedliche Abmessungen und damit Reinigungsleistungen des Tauchtropfkörpers wirtschaftlich zu ermöglichen. Die Strömungsverhältnisse für Abwasser und Luft und die Ausnutzung der Luft sollen in dem Tauchtropfkörper verbessert werden.

Diese Aufgabe ist durch die Merkmale des Kennzeichnungsteils des Anspruchs 1 gelöst. Dadurch entstehen in jedem Bewuchskörperpaket verhältnismäßig viele axial aufeinanderfolgende Umsetzungskammern gleicher Art aus kostengünstigen, gleichen Bewuchskörpern in denen jeweils die Strömungsverhältnisse für Abwasser und Luft optimal beherrschbar sind. Insbesondere können sich in den Umsetzungskammern keine Luftblasen von schädlicher Größe mehr bilden, wodurch einerseits die Luftverteilung und Luftausnutzung in dem Tauchtropfkörper verbessert und zum anderen schädliche dynamische Wirkungen auf den biologischen Rasen verhindert sind. Da ferner für die Begrenzung der Umsetzungskammern die Haltekonstruktion nicht mehr erforderlich ist, kann die Haltekonstruktion sehr viel leichter und einfacher hergestellt werden. Für jeden Einsatzfall lassen sich auf einfache Weise Bewuchskörper zu Bewuchskörperpaketen optimaler Länge zusammenstellen. Dadurch ergibt sich eine erhebliche Fertigungsvereinfachung und Flexibilität bei der Auslegung der Abwasserreinigungsvorrichtungen. Zweckmäßigerweise wird der walzenartige Tauchtropfkörper in einem z. B. aus Beton oder Stahlblech gefertigten Trog mit möglichst geringem Abstand zu einer Innenwand des Trogs drehbar gelagert und in geeigneter Weise drehend angetrieben.

Gemäß Anspruch 2 ist mit einfachen und kostengünstigen Mitteln einerseits eine hinreichende Abdichtung der Bewuchskörper gegeneinander erreicht, und zum anderen wirken die Randflansche als Abstandelemente, die benachbarte Bewuchskörper in gewünschtem Abstand voneinander halten.

Anspruch 3 kennzeichnet eine fertigungstechnisch besonders günstige Ausbildung des Randflansches.

Eine besonders gute gegenseitige Abdichtung läßt sich gemäß Anspruch 4 erreichen.

Die Merkmale des Anspruchs 5 erleichtern die Zentrierung und Abstandshaltung der Bewuchskörper. Der Plattenteil kann analog der DE-Offenlegungsschrift 29 14 689 gewellt sein.

Die Merkmale des Anspruchs 6 dienen strömungstechnischen Zwecken insofern, als die strömenden Medien, insbesondere die Luft, von der Oberfläche der Plattenteile weg in die Mitte zwischen den benachbarten Plattenteilen orientiert werden. Dadurch lassen sich unerwünschte Turbulenzen und damit die Gefahr der Ablösung biologischen Rasens von den Oberflächen der Plattenteile verhindern.

Durch die Merkmale des Anspruchs 7 ist gewährleistet, daß in der Auftauchphase die in den Umsetzkammern noch eingeschlossenen Luftblasen nicht schlagartig allein durch die Hauptdurchbrechung, sondern zeitlich und mengenmäßig verteilt zunächst durch die Hilfsdurchbrechungen und erst dann auch durch die Hauptdurchbrechung hindurch aus dem Tauchtropfkörper austreten. Dadurch wird ein gegebenes Luftvolumen in noch großflächigeren, innigeren Kontakt mit dem zu reinigenden Abwasser gebracht.

Die Anordnung gemäß Anspruch 8 dient strömungstechnischen Gründen und hält unerwünschte Strömungseinflüsse von dem biologischen Rasen aus den Oberflächen der Plattenteile fern.

Mit den Mitteln des Anspruchs 9 läßt sich auf einfache, kostengünstige Weise die gewünschte Leitwand realisieren. Diese Leitwand kann z. B. in Umfangsmitte der zugehörigen Umsetzungskammer angeordnet sein. Die Leitwand kann sich beispielsweise über die halbe radiale Höhe der Umsetzungskammer erstrecken.

Die Merkmale des Anspruchs 10 gewährleisten besonders gute Dichtung im Bereich der Leitwand.

Die Mittel des Anspruchs 11 dienen strömungstechnischen Zwecken und zentrieren die Strömungen auf die Mitte zwischen den benachbarten Plattenteilen.

Die Lösung gemäß Anspruch 12 ist fertigungstechnisch besonders einfach.

Auch die Merkmale des Anspruchs 13 bringen fertigungstechnische Vorteile.

Die Haltekonstruktion gemäß Anspruch 14 zeichnet sich durch geringes Gewicht und hohe Flexibilität sowie leichte Montierbarkeit aus.

Die Abstandkörper gemäß Anspruch 15 können verhältnismäßig leicht auf unterschiedliche Länge gebracht werden und damit die Länge des gesamten Tauchtropfkörpers bestimmen. Die Abstandkörper können z. B. rohrförmig ausgebildet sein. Zweckmäßigerweise sind die Bewuchskörper aus einem Kunststoff, z. B. aus Polypropylen, hergestellt, z. B. gegossen oder tiefgezogen. So können die elastischen Bewuchskörper mit einem gewissen axialen Übermaß gegenüber den starren Abstandskörpern hergestellt werden. Dieses Übermaß wird dann bei der axialen Verspannung der Stirnelemente und der Abstandskörper durch elastische Verformung des Bewuchskörperpakets zu Null gemacht, so daß zwischen den einzelnen Bewuchskörpern eine definierte Anlage und gegenseitige Dichtung herrschen.

Die Ausbildung gemäß Anspruch 16 ist besonders raumsparend.

Die Buchsen gemäß Anspruch 17 dienen gleichzeitig als Abstandselemente zwischen benachbarten Bewuchskörpern.

Gemäß Anspruch 18 ergibt sich eine besonders gute Dichtwirkung zwischen den Buchsen.

Die Ausbildung der Stirnelemente gemäß Anspruch 19 ist besonders einfach, leicht und günstig für die Montage.

Die Merkmale des Anspruchs 20 bedeuten eine Montageerleichterung.

Die Merkmale des Anspruchs 21 bringen bei verhältnismäßig großen Durchmessern der Tauchtropfkörper eine Transporterleichterung. Die geteilten Stirnelemente lassen sich am Einsatzort mit nur geringem Aufwand, z. B. durch Verschraubung, zusammensetzen.

Gemäß Anspruch 22 kann der Raum zwischen den Bewuchskörperpaketen und der Welle in günstiger Weise so groß gewählt werden, daß er optimal zur Vermischung von Abwasser und Luft beiträgt.

Die Erfindung wird nachfolgend anhand der in den Zeichnungen dargestellten Ausführungsbeispiele näher erläutert. Es zeigen :

Figur 1 eine Stirnansicht eines walzenartigen Tauchtropfkörpers mit einem Teil eines zugehörigen Troges im Querschnitt,

Figur 2 die teilweise geschnittene Ansicht gemäß Linie 2-2 in Fig. 1,

Figur 3 die Einzelheit 3 in Fig. 2 in vergrößerter Darstellung im Längsschnitt,

Figur 4 die Einzelheit 4 in Fig. 2 in vergrößerter Darstellung im Längsschnitt,

Figur 5 die Schnittansicht gemäß Linie 5-5 in Fig. 1 in vergrößerter Darstellung,

Figur 6 eine Seitenansicht auf einen in dem Tauchtropfkörper gemäß Fig. 1 bis 5 verwendbaren Bewuchskörper,

Figur 7 die Ansicht gemäß Linie 7-7 in Fig. 6 in vergrößerter Darstellung,

Figur 8 die Schnittansicht gemäß Linie 8-8 in Fig. 6 in vergrößerter Darstellung,

Figur 9 die Schnittansicht nach Linie 9-9 in Fig. 6 in vergrößerter Darstellung,

Figur 10 die Schnittansicht nach Linie 10-10 in Fig. 6 in vergrößerter Darstellung,

Figur 11 eine der Fig. 7 entsprechende Ansicht auf eine andere Ausführungsform von Bewuchskörpern und

Figur 12 eine den Fig. 7 und 11 entsprechende Ansicht auf eine weitere Ausführungsform von Bewuchskörpern.

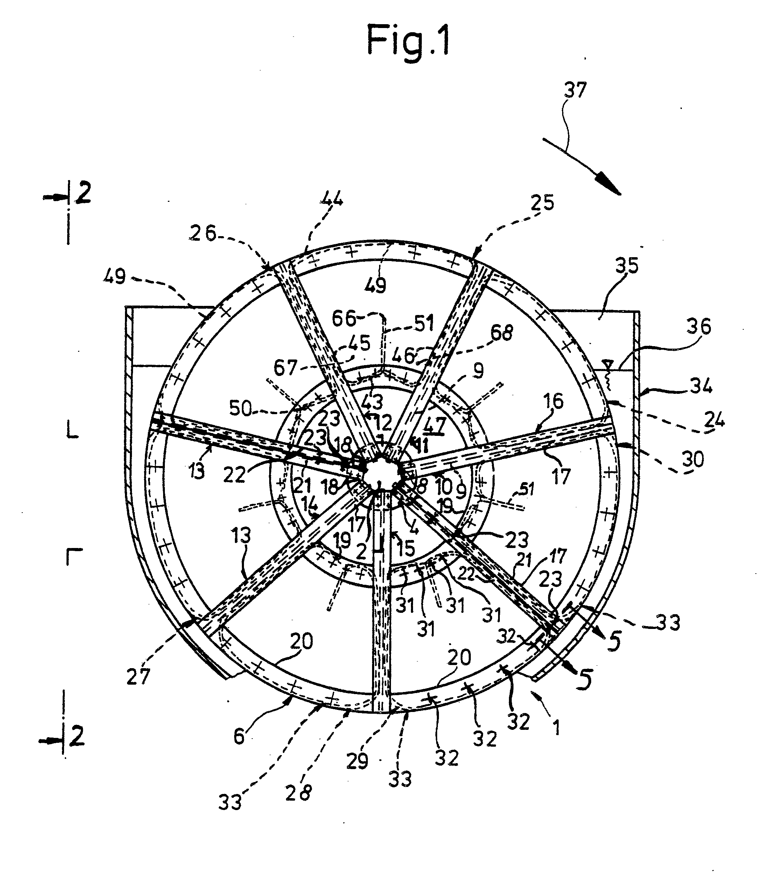

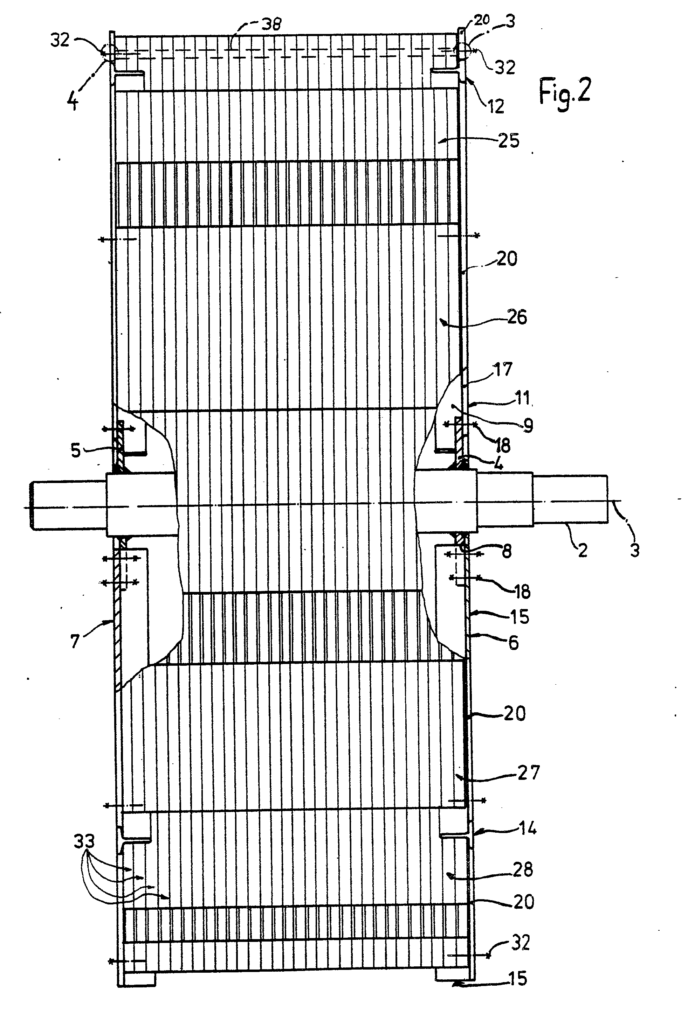

Fig. 1 zeigt einen walzenartigen Tauchtropfkörper 1 mit einer zentralen Welle 2, die eine Längsachse 3 (Fig. 2) aufweist. An der Welle 2 sind in axialem Abstand voneinander Flansche 4 und 5 (siehe auch Fig. 2) angeschweißt, an denen jeweils ein radartiges Stirnelement 6 und 7 lösbar befestigt ist.

Die Stirnelemente 6, 7 sind identisch aufgebaut und in dem montierten Zustand gemäß Fig. 2 lediglich um 180° um eine Querachse gegeneinander geschwenkt angeordnet. Es genügt daher, das Stirnelement 6 anhand der Fig. 1 und 2 im einzelnen zu beschreiben.

Die Flansche 4, 5 sind jeweils außen mit sieben radialen Schlitzen 8 versehen, die gleichmäßig über den Umfang verteilt sind. In jeden Schlitz 8 greift ein Ende eines Steges 9 einer Speiche 10 bis 16 von T-förmigen Querschnitt ein. Ein Flansch 17 jeder Speiche 10 bis 16 ist mittels vier Schrauben 18 mit dem zugehörigen Flansch 4 oder 5 der Welle 2 verbunden.

Die Stirnelemente 6, 7 sind dadurch versteift, daß zwischen je zwei der Speichen 10 bis 16 ein inneres Ringsegment 19 und, in radialem Abstand davon, ein äußeres Ringsegment 20 eingeschweißt sind.

Zur Erleichterung des Transports der Stirnelemente 6, 7 sind diese parallel zu der Längsachse 3 geteilt. Dies ist dadurch bewerkstelligt, daß die Speichen 13 und 16 jeweils aus zwei Winkelprofilen 21 und 22 gebildet sind. Der Steg 9 der Speichen 13, 16 ist dadurch geschaffen, daß jeweils ein Schenkel der Winkelprofile 21, 22 aneinandergelegt und mit Schrauben 23 gegeneinander gepreßt sind.

Zwischen je zwei benachbarten der Speichen 10 bis 16 ist ein parallel zu der Längsachse 3 verlaufendes Bewuchskörperpaket 24 bis 30 angeordnet. Jedes Bewuchskörperpaket 24 bis 30 ist durch das zugehörige innere Ringsegment 19 durchdringes Schrauben 31 und durch das zugehörige äußere Ringsegment 20 durchdringende Schrauben 32 zwischen den Stirnelementen 6, 7 eingespannt.

Jedes der Bewuchskörperpakete 24 bis 30 ist aus einer Vielzahl einzelner flächiger Bewuchskörper 33 zusammengestellt, die parallel zu der Längsachse 3 hintereinander angeordnet sind.

Die Welle 2 des Tauchtropfkörpers 1 ist in ansich bekannter Weise in Stirnwänden 35 eines Troges 34 gelagert in dem Abwasser bis zu einer Spiegellinie 36 steht. Der untere Teil des Troges 34 ist halbzylindrisch ausgebildet und koaxial mit der Längsachse 3. Der Drehantrieb der Welle 2 erfolgt in an sich bekannter Weise durch einen an den Trog 34 angeflanschten Motor. Eine Umlaufrichtung 36 des Tauchtropfkörpers 1 ist in Fig. 1 durch einen Pfeil gekennzeichnet.

Zwischen jedem parallel zu der Längsachse 3 fluchtenden Schraubenpaar 31, 31 und 32, 32 der Stirnelemente 6, 7 ist zwischen den zugehörigen inneren Ringsegmenten 19 oder äußeren Ringsegmenten 20 ein zu der Längsachse 3 paralleler, rohrförmiger, starrer Abstandskörper 38 eingespannt. Ein solcher Abstandskörper 38 ist in Fig. 2 oben gestrichelt angedeutet und in den Fig. 3 und 4 in seiner Ausbildung im einzelnen gezeichnet. Jeder Abstandskörper 38 weist an seinen Enden ein Innengewinde 39 auf, in das jeweils die Schrauben 31, 32 von der Außenseite der Stirnelemente 6, 7 her eingeschraubt sind. Durch die Schrauben 31, 32 werden also die Stirnelemente 6, 7 fest gegen die Enden der Abstandskörper 38 gezogen.

Die Abstandskörper 38 durchdringen die Bewuchskörperpakete 24 bis 30. Dabei ist jeder Bewuchskörper 33 gemäß den Fig. 3 und 4 jeweils mit einer Buchse 40 auf den zugehörigen Abstandskörpern 38 geführt. Die miteinander fluchtenden Buchsen 40 benachbarter Bewuchskörper 33 liegen in Dichtberührung aneinander an. In dem gezeichneten Ausführungsbeispiel sind die Buchsen gestuft und axial ineinandurgeschachtelt ausgebildet. So dienen die Buchsen 40 als Abstandselemente, die gewellte Plattenteile 41 der Bewuchskörper 33 derart in axialem Abstand voneinander halten, daß zwischen benachbarten Bewuchskörpern 33 jeweils eine Umsetzungskammer 42 aufrechterhalten wird.

Da die Bewuchskörper 33 aus Polypropylen gespritzt sind, weisen sie eine gewissen Elastizität auf.

Bei der Montage des Tauchtropfkörpers 1 wird zunächst ein Stirnelement, z. B. 6, mit den Schrauben 31, 32 festan die Abstandskörper 38 angezogen. Der letzte Bewuchskörper 33 jedes Bewuchskörperpakets 24 bis 30 steht mit seinen dem Stirnelement 7 benachbarten Buchsen 40 um ein geringes Maß über das freie Ende der Abstandskörper 38 hinaus. Dieses Maß wird durch elastische Verformung und gegenseitige Anpressung aller Buchsen aneinander zu Null gemacht, wenn auch das zweite Stirnelement 7 mittels der Schrauben 31, 32 schließlich gegen das freie Ende der Abstandskörper 38 gespannt wird. Diesen fertig montierten und gespannten Zustand zeigen die Fig. 3 und 4. Durch diese gegenseitige Anspressung der Buchsen 40 wird eine ausgezeichnete Flüssigkeitsabdichtung im Bereich der Buchsen 40 erreicht und damit ein ungewolltes Überströmen von Abwasser von der einen Umsetzungskammer 42 in die andere verhindert.

Jede Umsetzungskammer 42 weist, bezogen auf die Längsachse 3 des Tauchtropfkörpers 1, eine innere Wand 43 (Fig. 1) und eine äußere Wand 44 auf, die durch gegenüber Radien des Tauchtropfkörpers 1 etwas nach innen eingezogene Seitenwände 45 und 46 dicht miteinander verbunden sind. Aus verfahrenstechnischen Gründen befinden sich die inneren Wände 43 der Umsetzungskammern 42 in radialem Abstand von der Welle 2, wodurch zwischen der Welle 2 und den Bewuchskörperpaketen 24 bis 30 ein sich parallel zu der Längsachse 3 erstreckender Innenraum 47 von im wesentlichen kreisringförmiger Querschnittsfläche gebildet ist.

Fig. 5 zeigt im einzelnen den Aufbau und die Montage der geteilten Speiche 16 und ihre Schweißbefestigung an den angrenzenden äußeren Ringsegmenten 20, 20.

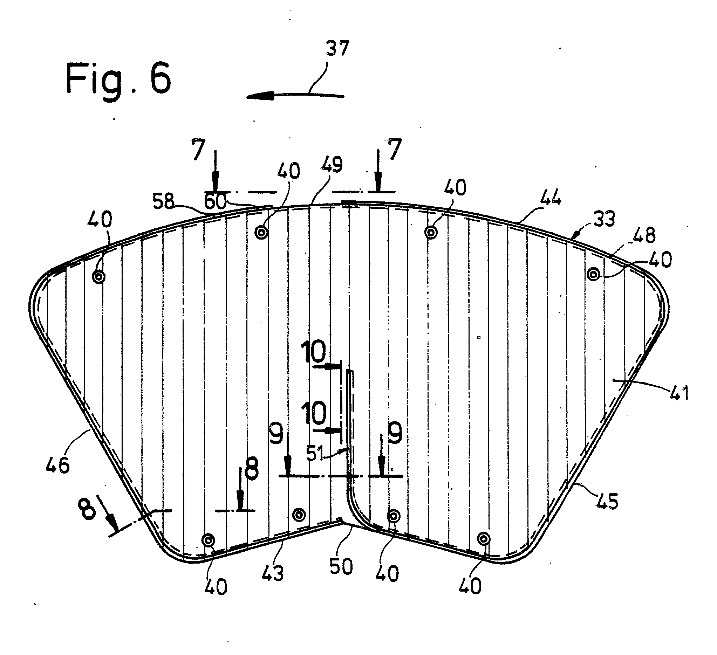

In Fig. 6 ist ein einzelner Bewuchskörper 33 dargestellt. Die innere Wand 43, die äußere Wand 44 und die beiden Seitenwände 45, 46 sind durch einen Randflansch 48 gebildet, der im wesentlichen um den gesamten Bewuchskörper 33 herum umläuft und nur etwa in der Mitte der äußeren Wand 44 durch eine Hauptdurchbrechung 49 und etwa in der Mitte der inneren Wand 43 durch eine Durchbrechung 50 unterbrochen ist. Angrenzend an die Durchbrechung 50 geht der Randflansch 48 in eine sich radial nach außen erstreckende Leitwand 51 über, die etwa bis zur halben radialen Erstreckung des Bewuchskörpers 33 reicht.

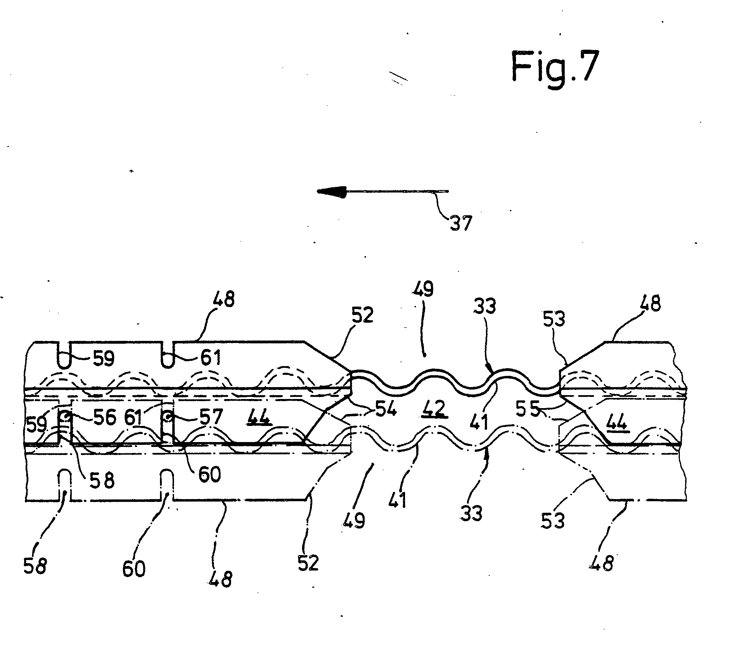

In Fig. 7 sind zwei Bewuchskörper 33 in ihre Betriebstellung zusammengesetzt, wobei zur Verdeutlichung der eine Bewuchskörper 33 in voll ausgezogen Linien und der andere Bewuchskörper 33 strichpunktiert dargestellt sind. Es ist zu erkennen, daß der Randflansch 48 sich jeweils nach beiden Seiten über den gewellten Plattenteil 41 des Bewuchskörpers 33 hinaus erstreckt. Die Randflansche 48 benachbarter Bewuchskörper 33 überlappen sich und stehen so in besonders günstiger Dichtverbindung miteinander.

An die Hauptdurchbrechungen 49 angrenzende Kanten 52 und 53 der Randflansche 48 definieren jeweils eine V-förmige Ausnehmung 54 und 55, deren Scheitel sich von der Hauptdurchbrechnung 49 weg zumindest annähernd in die Mitte zwischen die Plattenteile 41 der benachbarten Bewuchskörper 33 erstreckt.

Ein die äußere Wand 44 jeder Umsetzungskammer 42 bildender Teil des Randflansches 48 weist in der Umlaufrichtung 37 des Tauchtropfkörpers 1 vor der Hauptdurchbrechung 49 verhältnismäßig kleine Hilfsdurchbrechungen 56 und 57 auf. Die Hilfsdurchbrechungen 56, 57 entstehen, wenn parallel zu der Längsachse 3 angeordnete Randschlitze 58 bis 61 nach dem Ineinanderschachteln der Bewuchskörper 33 zur teilweisen Deckung miteinander gebracht sind. Vorzugsweise sind auch diese Hilfsdurchbrechungen 56, 57 zumindest annähernd in der Längsmitte der Umsetzungskammern 42 angeordnet, um eine Beeinträchtigung des auf der Oberfläche der Bewuchskörper 33 angesiedelten biologischen Rasens durch die Strömungen in den Umsetzungskammern 42 zu vermeiden.

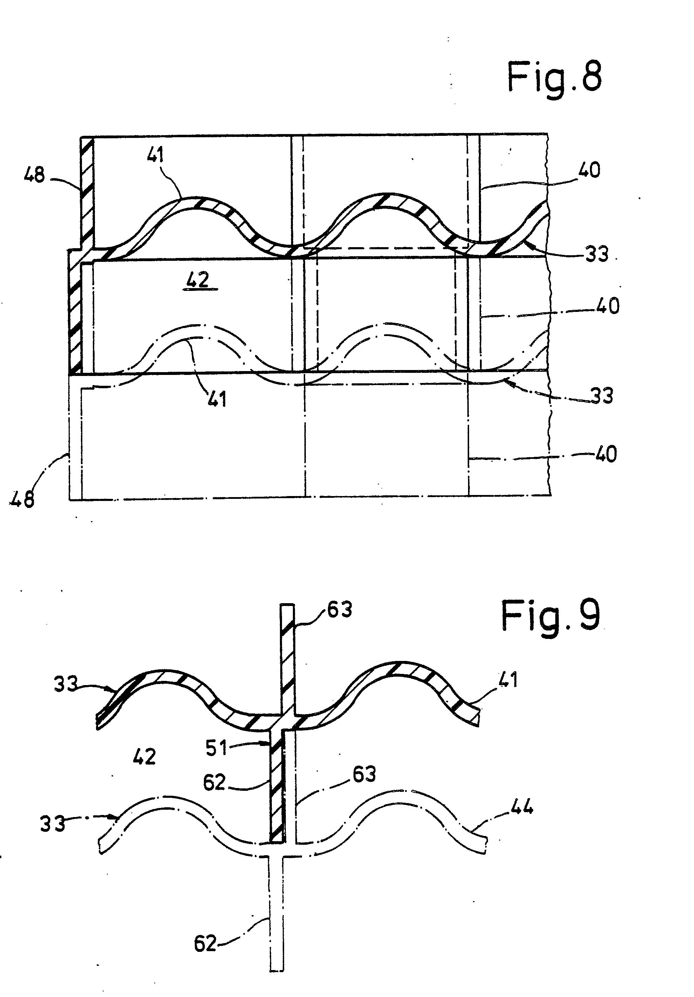

Fig. 8 zeigt wiederum zwei Bewuchskörper 33 in ihrer Betriebstellung. Dabei sind sowohl die Randflansche 48 als auch die Buchsen 40 zu Erhöhung der Dichtwirkung und Verbesserung der gegenseitigen Abstützung ineinandergesteckt.

Fig. 9 verdeutlicht den Aufbau der Leitwand 51 bei wiederum zwei in Betriebstellung befindlichen Bewuchskörpern 33. Jede der Leitwände 51 wird demnach durch einander überlappende Leitstege 62 und 63 benachbarter Bewuchskörper 33 gebildet. Die Leitstege 62, 63 erstecken sich jeweils zu gegenüberliegenden Seiten des Plattenteils 41 des Bewuchskörpers 33 und sind gegenüber einander quer zur Längsachse 3 derart versetzt, daß sich bei gemäß Fig. 9 zusammengesteckter Leitwand 51 eine gute Dichtanlage der zusammenwirkenden Leitstege 62, 63 ergibt.

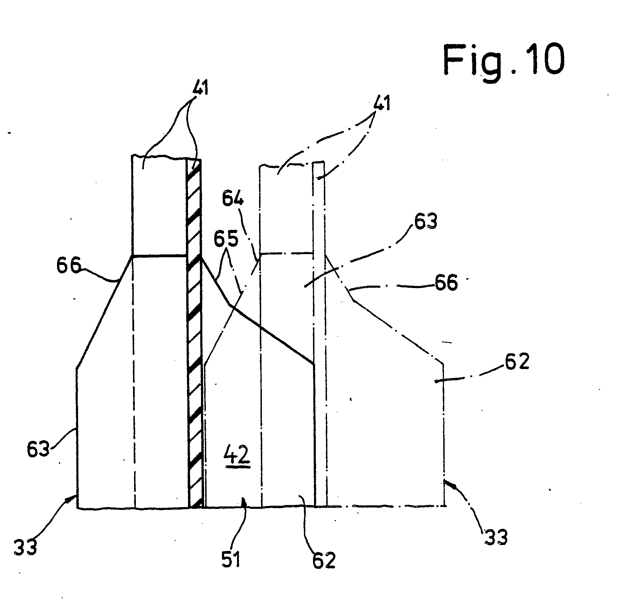

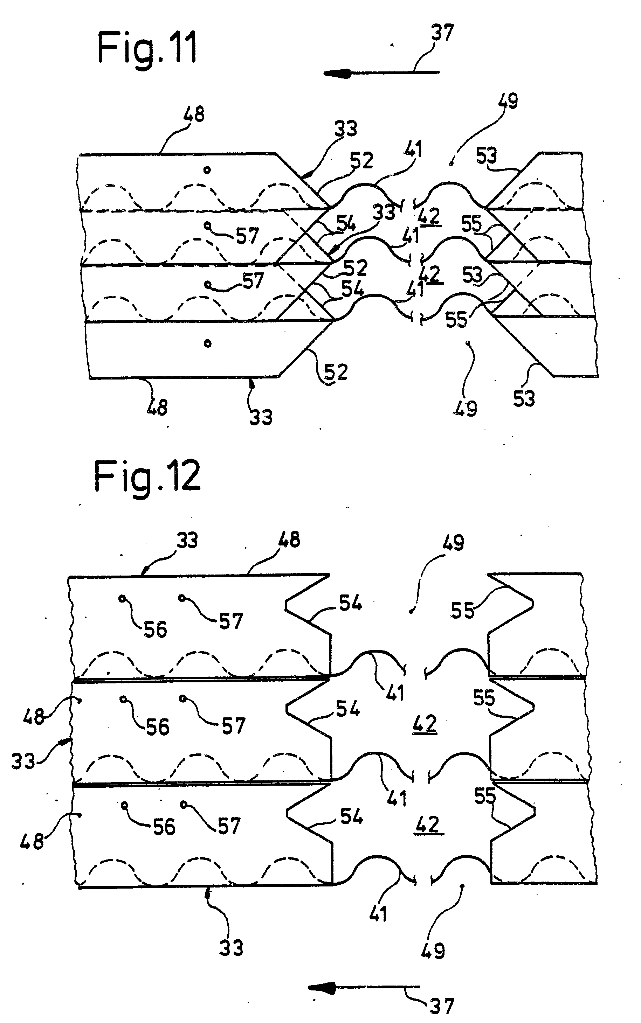

Fig. 10 zeigt, wie eine äußere Kante 64 der Leitwand 51 eine V-förmige Ausnehmung 65 definiert, deren Scheitel sich nach innen zumindest annähernd in die Mitte zwischen die Plattenteile 41 der benachbarten Bewuchskörper 33 erstreckt. In dem Fall der Fig. 10 wird die äußere Kante 64 durch überlagerte Außenkanten 66 der Leitstege 62, 63 benachbarter Bewuchskörper 33 gebildet. Die V-förmige Ausnehmung 65 könnte jedoch auch analog Fig. 12 in einer nicht durch Überlappung von Leitstegen gebildeten Leitwand vorgesehen sein.

Zur Verdeutlichung sind die Darstellungen anderer Ausführungsformen in den Fig. 11 und 12 schematisch gehalten. Gleiche Teile sind mit gleichen Bezugszahlen versehen.

In Fig. 11 sind die Kanten 52, 53 des Randflansches 48 jedes Bewuchskörpers 33 unter 45° abgeschrägt. Auch durch diese Maßnahme sind die V-förmigen Ausnehmungen 54, 55 hinreichend von den Plattenteilen 41 der benachbarten Bewuchskörper 33 entfernt. Alternativ sind in Fig. 11 ferner die Hilfsdurchbrechungen 57 als miteinander fluchtende Bohrungen übereinanderliegender Teile der Randflansche 48 ausgebildet.

In Fig. 12 ist jeder Randflansch 48 so ausgebildet, daß er einerseits den zugehörigen Plattenteil 41 überdeckt und zum anderen sich nur zu einer Seite dieses Plattenteils 41 hin erstreckt. Die Randflansche 48 benachbarter Bewuchskörper 33 liegen unter ausreichender gegenseitiger Abdichtungen stumpf aneinander an. Hier sind sowohl die V-förmigen Ausnehmungen 54, 55 als auch die Hilfsdurchbrechungen 56, 57 unmittelbar in den Randflanschen 48 ausgebildet, da, wie Fig. 12 zeigt, im betriebsfertig zusammengesetzten Zustand Teile der Randflansche 48 benachbarter Bewuchskörper 33 sind nicht mehr überlappen.

Zur Funktion der zuvor beschriebenen Abwasserreinigungsvorrichtungen kann auf die eingangs behandelte DE-OS 29 11 975 verwiesen werden. In analoger Weise wird in dem vorliegenden Fall bei Drehung des Tauchkopfkörpers 1 in der Umlaufrichtung 37 beim Eintauchen in jede Umsetzungskammer 42 durch die Hauptdurchbrechung 49 hindurch ein Luftvolumen eingetragen und in der Umsetzungskammer eingeschlossen. Diese Luftvolumen verbleibt bis kurz vor Erreichen der untersten Stellung in einer, bezogen auf die Umlaufrichtung 37, hinteren Teilkammer 67 (Fig. 1) jeder Umsetzungskammer 42. Die hintere Teilkammer 67 ist durch die Seitenwand 45, die Leitwand 51 und den dazwischen liegenden Teil der inneren Wand 43 begrenzt. Bei fortgesetztem Umlauf des Tauchtrofpkörpers 1 strömt das eingeschlossene Luftvolumen zunehmend über die Außenkante 66 in eine vordere Teilkammer 68 jeder Umsetzungskammer 42. Jede vordere Teilkammer 68 ist durch die Seitenwand 46, die Leitwand 51 und den dazwischen liegenden Teil der inneren Wand 43 begrenzt. Das so in die vordere Teilkammer 68 gelangende Luftvolumen strömt daraus beim Auftauchen der zugehörigen Umsetzungskammer 42 zunehmend durch die Durchbrechung 50 in der inneren Wand 43 und durchperlt das Abwasser in dem Innenraum 47. Ein verbleibendes Luftvolumen wird schließlich in dem beim Auftauchen der Umsetzungskammer 42 oberen Teil der vorderen Teilkammer 68 eingeschlossen und kann aus diesem nur noch durch die Hilfsdurchbrechungen 56, 57 in dosierter Weise austreten, bewirkt im übrigen aber eine Auftriebskraft, die die Drehung des Tauchtrofpkörpers 1 unterstützt und daher Antriebsleistung einzusparen hilft.

**Ansprüche**

1. Vorrichtung für die aerobe biologische Reinigung von Abwässern nach dem kombinierten Tauchtropfkörper-Belebungsverfahren, mit wenigstens einem zu seinem größten Teil in das Abwasser eintauchenden, um eine Längsachse (3) umlaufenden Tauchtropfkörper (1), der flächige Bewuchskörper (33) als Substrat für einen sogenannten biologischen Rasen aufweist, wobei mehrere Bewuchskörper (33) durch Abstandselemente im Abstand voneinander gehalten, jeweils zu einem Bewuchskörperpaket (24 bis 30) zusammengestellt und in einer Haltekonstruktion des Tauchtropfkörpers (1) festgelegt sind, wobei der Tauchtropfkörper (1) parallel zu und im Abstand von seiner Längsachse (3) angeordnete Umsetzungskammern (42) aufweist, und wobei jede Umsetzungskammer (42) an ihrer, bezogen auf die Längsachse (3), inneren (43) und äußeren (44) Wand jeweils mit wenigstens einer Durchbrechung (50 ; 49, 56, 57) für den Durchlaß von Abwasser und Luft versehen und im übrigen geschlossen ist, dadurch gekennzeichnet, daß jede Umsetzungskammer (42) durch zwei benachbarte, gesonderte, flächige Bewuchskörper (33) begrenzt ist.

2. Vorrichtung nach Anspruch 1, dadurch gekennzeichnet, daß jeder Bewuchskörper (33) an seinem Umfang mit einem Randflansch (48) in Dichtberührung mit einem oder beiden benachbarten Bewuchskörpern (33) steht.

3. Vorrichtung nach Anspruch 1 oder 2, dadurch gekennzeichnet, daß jeder Bewuchskörper (33) mit einem Randflansch (48) in Dichtberührung mit einem komplementären Randflansch (48) des einen oder der beiden benachbarten Bewuchskörper (33) steht.

4. Vorrichtung nach Anspruch 3, dadurch gekennzeichnet, daß die Randflansche (48) benachbarter Bewuchskörper (33) sich überlappen.

5. Vorrichtung nach einem der Ansprüche 2 bis 4, dadurch gekennzeichnet, daß der Randflansch (48) sich nach beiden Seiten über einen Plattenteil (41) des Bewuchskörpers (33) hinaus erstreckt.

6. Vorrichtung nach einem der Ansprüche 1 bis 5, dadurch gekennzeichnet, daß ein die äußere Wand (44) jeder Umsetzungskammer (42) bildender Teil des Randflansches (48) im Bereich einer Hauptdurchbrechung (49) unterbrochen ist, und daß an die Hauptdurchbrechungen (49) angrenzende Kanten (52, 53) der Randflansche (48) jeweils eine V-förmige Ausnehmung (54, 55) definieren, deren Scheitel sich von der Hauptdurchbrechung (49) weg zumindest annähernd in die Längsmitte zwischen Plattenteile (41) der benachbarten Bewuchskörper (33) erstreckt.

7. Vorrichtung nach einem der Ansprüche 1 bis 6, dadurch gekennzeichnet, daß ein die äußere Wand (44) jeder Umsetzungskammer (42) bildender Teil des Randflansches (48) in Umlaufrichtung (37) des Tauchtropfkörpers (1) vor einer Hauptdurchbrechung (49) von verhältnismäßig größer freier Querschnittsfläche wenigstens eine verhältnismäßig kleine Hilfsdurchbrechung (56 ; 57) aufweist.

8. Vorrichtung nach Anspruch 7, dadurch gekennzeichnet, daß die wenigstens eine Hilfsdurchbrechung (56 ; 57) zumindest annähernd in der Längsmitte zwischen Plattenteilen (41) der benachbarten Bewuchskörper (33) angeordnet ist.

9. Vorrichtung nach einem der Ansprüche 1 bis 8, bei der sich von der inneren Wand (43) jeder Umsetzungskammer (42) eine Leitwand (51) bis in einen Abstand von der äußeren Wand (44) nach außen erstreckt, dadurch gekennzeichnet, daß ein die Leitwand (51) bildender Leitsteg (62, 63) einerseits an einem der Bewuchskörper (33) dicht befestigt ist und andererseits in Dichtberührung mit dem benachbarten Bewuchskörper (33) steht.

10. Vorrichtung nach Anspruch 9, dadurch gekennzeichnet, daß die Leitwand (51) durch einander überlappende Leitstege (62, 63) benachbarter Bewuchskörper (33) gebildet ist.

11. Vorrichtung nach Anspruch 9 oder 10, dadurch gekennzeichnet, daß eine äußere Kante (64) der Leitwand (51) eine V-förmige Ausnehmung (65) definiert, deren Scheitel sich nach innen zumindest annähernd in die Längsmitte zwischen Plattenteile (41) der benachbarten Bewuchskörper (33) erstreckt.

12. Vorrichtung nach einem der Ansprüche 9 bis 11, dadurch gekennzeichnet, daß jeder Leitsteg (62, 63) innen mit dem Randflansch (48) des zugehörigen Bewuchskörpers (33) dicht verbunden ist.

13. Vorrichtung nach einem der Ansprüche 9 bis 12, dadurch gekennzeichnet, daß die Durchbrechung (50) der inneren Wand (43) an die Leitwand (51) angrenzt.

14. Vorrichtung nach einem der Ansprüche 1 bis 13, bei der die Haltekonstruktion eine die Längsachse (3) des Tauchtropfkörpers (1) definierende Welle (2) aufweist, von der aus sich die Bewuchskörperpakete (24 bis 30) zwischen sich aufnehmende Stirnelemente (6, 7) nach außen erstrecken, dadurch gekennzeichnet, daß die Bewuchskörperpakete (24 bis 30) und die Stirnelemente (6, 7) in axialer Richtung gegeneinandergespannt sind.

15. Vorrichtung nach Anspruch 14, bei der zwischen den Stirnelementen (6, 7) achsparallele, starre Abstandskörper (38) eingespannt sind, dadurch gekennzeichnet, daß die Bewuchskörper (33) in Grenzen elastisch ausgebildet und in dem gegeneinander und gegen die Stirnelemente (6, 7) gespannten Zustand elastisch verformt sind.

16. Vorrichtung nach Anspruch 15, dadurch gekennzeichnet, daß die Abstandskörper (38) die Bewuchskörperpakete (24 bis 30) durchdringen.

17. Vorrichtung nach Anspruch 16, dadurch gekennzeichnet, daß jeder Bewuchskörper (33) mit jeweils einer Buchse (40) auf den zugehörigen Abstandskörpern (38) geführt ist, und daß die miteinander fluchtenden Buchsen (40) benachbarter Bewuchskörper (33) in Dichtberührung aneinander anliegen.

18. Vorrichtung nach Anspruch 17, dadurch gekennzeichnet, daß die Buchsen (40) gestuft und axial ineinanderschachtelbar ausgebildet sind.

19. Vorrichtung nach einem der Ansprüche 14 bis 18, bei der jedes Stirnelement (6, 7) radartig mit Speichen (10 bis 16) ausgebildet ist, dadurch gekennzeichnet, daß die Speichen durch Ringsegmente (19, 20) miteinander verbunden und die Abstandskörper (38) gegen die Ringsegmente (19, 20) gespannt sind.

20. Vorrichtung nach Anspruch 19, dadurch gekennzeichnet, daß die Speichen (10 bis 16) innen an Flanschen (4, 5) der Welle (2) lösbar befestigt sind.

21. Vorrichtung nach einem der Ansprüche 14 bis 20, dadurch gekennzeichnet, daß jedes Stirnelement (6, 7) parallel zu der Längsachse (3) des Tauchtropfkörpers (1) teilbar (vgl. 21 bis 23) ist.

22. Vorrichtung nach einem der Ansprüche 14 bis 21, dadurch gekennzeichnet, daß die inneren Wände (43) der Umsetzungskammern (42) in radialem Abstand von der Welle (2) angeordnet sind.

**Claims**

1. Apparatus for the aerobic biological purification of waste waters according to the combined filtration-activation method, with at least one submerged filter (1) rotating about a longitudinal axis (3) and submerged to the greater part in the waste water, which includes laminar growth bodies (33) as substrates for a so-called biological hotbed, wherein several growth bodies (33) are held mutually spaced by means of spacing elements, are combined into a growth body assembly (24 to 30) and are secured in a supporting construction of the filter (1), wherein the filter (1) has conversion chambers (42) arranged parallel to and spaced from its longitudinal axis (3) and wherein each conversion chamber (42) is provided in its inner (43) and its outer (44) walls, relative to the longitudinal axis (3), with at least one aperture (50 ; 49, 56, 57) for the passage of waste water and air and is otherwise closed, characterized in that each conversion chamber (42) is defined by two adjacent separate laminar growth bodies (33).

2. Apparatus according to claim 1, characterized in that each growth body (33) at its periphery is located with a marginal flange (48) in sealing contact with one or both adjacent growth bodies (33).

3. Apparatus according to claim 1 or 2, characterized in that each growth body (33) is located with a marginal flange (48) in sealing contact with a complementary marginal flange (48) of one or both adjacent growth bodies (33).

4. Apparatus according to claim 3, characterized in that the marginal flanges (48) of adjacent growth bodies (33) mutually overlap.

5. Apparatus according to any of claims 2 to 4, characterized in that the marginal flange (48) extends on both sides from a plate part (41) of the growth body (33).

6. Apparatus according to any of claims 1 to 5, characterized in that a part of the marginal flange (48) forming the outer wall (44) of each conversion chamber (42) is interrupted in the region of a main aperture (49) and that, at the main apertures (49) edges (52, 53) limiting the marginal flange (48) define a V-shaped opening (54, 55), the apex of which extends from the main aperture (49) at least approximately to the longitudinal mid-point between plate parts (41) of adjacent growth bodies (33).

7. Apparatus according to any of claims 1 to 6, characterized in that a part of the marginal flange (48) forming the outer wall (44) of each conversion chamber (42), in the direction of rotation (37) of the filter (1) includes, before a main aperture (49) of a relatively large free cross-sectional surface area, at least one relatively small auxiliary aperture (56 ; 57).

8. Apparatus according to claim 7, characterized in that the at least one auxiliary aperture (56 ; 57) is arranged at least approximately at the longitudinal midpoint between plate parts (41) of the adjacent growth bodies (33).

9. Apparatus according to any of claims 1 to 8, in which a guide wall (51) extends outwardly from the inner wall (43) of each conversion chamber (42) to a point spaced from the outer wall (44), characterized in that a guide part (62, 63) forming the guide wall (51) is sealingly secured, at one side, to one of the growth bodies (33) and, at the other side, is in sealing contact with the adjacent growth body (33).

10. Apparatus according to claim 9, characterized in that the guide wall (51) is formed by mutually overlapping guide parts (62, 63) of adjacent growth bodies (33).

11. Apparatus according to claim 9 or 10, characterized in that an outer edge (64) of the guide wall (51) defines a V-shaped opening (65), the apex of which extends inwardly at least approximately to the longitudinal mid-point between plate parts (41) of the adjacent growth bodies (33).

12. Apparatus according to any of claims 9 to 11, characterized in that each guide part (62, 63) is sealingly connected inside with the peripheral flange (48) of the associated growth body (33).

13. Apparatus according to any of claims 9 to 12, characterized in that the aperture (50) in the inner wall (43) is provided at the guide wall (51).

14. Apparatus according to any of claims 1 to 13, in which the supporting construction includes a shaft (2) defining the longitudinal axis (3) of the submerged filter (1), from which the growth body assemblies (24, 30) extend between opposed end elements (6, 7), characterized in that the growth body assemblies (24 to 30) and the end elements (6, 7) are held tightly together in the axial direction.

15. Apparatus according to claim 14, in which rigid spacing members (38) are located parallel to the axis between the end elements (6, 7), characterized in that the growth bodies (33) are constructed elastically within limits and are elastically deformed when axially urged against each other and against the end elements (6, 7).

16. Apparatus according to claim 15, characterized in that the spacing members (38) pass through the growth body assemblies (24 to 30).

17. Apparatus according to claim 16, characterized in that each growth body (33) is guided with a respective bushing (40) on the associated spacing members (38) and that the mutually aligned bushes (40) of adjacent growth bodies (33) are mounted in sealing contact with each other.

18. Apparatus according to claim 17, characterized in that the bushes (40) are stepped and made to be axially internestable.

19. Apparatus according to any of claims 14 to 18, in which each end element (6, 7) is constructed as a wheel with spokes (10 to 16), characterized in that the spokes are connected together by ring segments (19, 20) and the spacing members (38) are urged against the ring segments (19, 20).

20. Apparatus according to claim 19, characterized in that the spokes (10 to 16) are detachably mounted inside on flanges (4, 5) of the shaft (2).

21. Apparatus according to any of claims 14 to 20, characterized in that each end element (6, 7) is dividable (see 21 to 23) parallel to the longitudinal axis (3) of the filter (1).

22. Apparatus according to any of claims 14 to 21, characterized in that the inner walls (43) of the conversion chambers (42) are arranged radially spaced from the shaft (2).

**Revendications**

1. Appareil pour l'épuration biologique aérobie des eaux usées selon le procédé combiné à lits immergés et à boues activées, comportant au moins un lit immergé (1) plongeant par sa majeure partie dans l'eau usée, pouvant tourner autour d'un axe longitudinal (3) et qui présente des corps de croissance plats (33) comme substrat de ce qu'on appelle un gazon biologique, plusieurs corps de croissance (33) étant maintenus espacés les uns des autres par des éléments d'espacement, étant chaque fois rassemblés en un paquet de corps de croissance (24 à 30) et fixés dans une structure de retenue du lit immergé (1), le lit immergé (1) présentant des chambres de conversion (42) disposées parallèlement à son axe longitudinal (3) et espacées de celui-ci, et chaque chambre de conversion (42) étant munie, à chacune de ses parois intérieure (43) et extérieure (44) relativement à l'axe longitudinal (3), d'au moins une perforation (50 ; 49, 56, 57) pour le passage d'eau usée et d'air et étant fermée par ailleurs, caractérisé par le fait que chaque chambre de conversion (42) est limitée par deux corps de croissance plats (33) séparés et voisins.

2. Appareil selon la revendication 1, caractérisé par le fait que chaque corps de croissance (33) est en contact étanche, à sa circonférence, par un rebord marginal (48), avec l'un des corps de croissance voisins (33) ou avec tous les deux.

3. Appareil selon l'une des revendications 1 et 2, caractérisé par le fait que chaque corps de croissance (33) est en contact étanche, par un rebord marginal (48), avec un rebord marginal complémentaire (48) de l'un des corps de croissance voisins (33) ou de tous les deux.

4. Appareil selon la revendication 3, caractérisé par le fait que les rebords marginaux (48) de corps de croissance voisins (33) se chevauchent.

5. Appareil selon l'une des revendications 2 à 4, caractérisé par le fait que le rebord marginal (48) s'étend des deux côtés au-delà d'une partie en plaque (41) du corps de croissance (33).

6. Appareil selon l'une des revendications 1 à 5, caractérisé par le fait qu'une partie du rebord marginal (48) qui forme la paroi extérieure (44) de chaque chambre de conversion (42) est interrompue dans la région d'une perforation principale (49) et que des arêtes (52, 53) des rebords marginaux (48) qui sont voisines des perforations principales (49) définissent chaque fois un évidement en V (54, 55) dont le sommet s'étend, en s'éloignant de la perforation principale (49) au moins approximativement jusqu'au milieu longitudinal entre de parties en plaque (41) des corps de croissance voisins (33).

7. Appareil selon l'une des revendications 1 à 6, caractérisé par le fait qu'une partie du rebord marginal (48) formant la paroi extérieure (44) de chaque chambre de conversion (42) présente, avant une perforation principale (49) ayant une aire de section relativement grande, dans le sens de rotation (37) du lit immergé (1), au moins une perforation auxiliaire (56 ; 57) relativement petite.

8. Appareil selon la revendication 7, caractérisé par le fait que la ou les perforations auxiliaires (56 ; 57) sont disposées au moins approximativement au milieu longitudinal entre de parties en plaque (41) des corps de croissance voisins (33).

9. Appareil selon l'une des revendications 1 à 8, dans lequel, en partant de la paroi intérieure (43) de chaque chambre de conversion (42), une paroi directrice (51) s'étend vers l'extérieur jusqu'à un point espacé de la paroi extérieure (44), caractérisé par le fait qu'une âme directrice (62, 63) formant la paroi directrice (51) est, d'une part, fixée de façon étanche à l'un des corps de croissance (33) et, d'autre part, en contact étanche avec le corps de croissance voisin (33).

10. Appareil selon la revendication 9, caractérisé par le fait que la paroi directrice (51) est formée par des âmes directrices (62, 63) de corps de croissance voisins (33), qui se chevauchent l'une l'autre.

11. Appareil selon l'une des revendications 9 et 10, caractérisé par le fait qu'une arête extérieure (64) de la paroi directrice (51) définit un évidement en V (65) dont le sommet s'étend vers l'intérieur, au moins approximativement jusqu'au milieu longitudinal entre de parties en plaque (41) des corps de croissance voisins (33).

12. Appareil selon l'une des revendications 9 à 11, caractérisé par le fait que chaque âme directrice (62, 63) est reliée intérieurement de façon étanche au rebord marginal (48) du corps de croissance correspondant (33).

13. Appareil selon l'une des revendications 9 à 12, caractérisé par le fait que la perforation (50) de la paroi intérieure (43) est voisine de la paroi directrice (51).

14. Appareil selon l'une des revendications 1 à 13, dans lequel la structure de retenue présente un arbre (2) définissant l'axe longitudinal (3) du lit immergé (1) et duquel partent, vers l'extérieur, des éléments frontaux (6, 7) logeant entre eux les paquets de corps de croissance (24 à 30), caractérisé par le fait que les paquets de corps de croissance (24 à 30) et les éléments frontaux (6, 7) sont tendus entre eux en direction axiale.

15. Appareil selon la revendication 14, dans lequel des corps d'espacement rigides (38) parallèles à l'axe sont enserrés entre les éléments frontaux (6, 7), caractérisé par le fait que les corps de croissance (33) sont conçus sous forme élastique entre certaines limites et sont déformés élastiquement dans l'état tendu entre eux et vis-à-vis des éléments frontaux (6, 7).

16. Appareil selon la revendication 15, caractérisé par le fait que les corps d'espacement (38) traversent les paquets de corps de croissance (24 à 30).

17. Appareil selon la revendication 16, caractérisé par le fait que chaque corps de croissance (33) est guidé par un manchon respectif (40) sur les corps d'espacement correspondants (38) et que les manchons (40) de corps de croissance voisins (33), manchons qui sont alignés entre eux sont appliqués l'un contre l'autre en contact étanche.

18. Appareil selon la revendication 17, caractérisé par le fait que les manchons (40) ont une structure en gradin et peuvent s'emboîter axialement l'un dans l'autre.

19. Appareil selon l'une des revendications 14 à 18, dans lequel chaque élément frontal (6, 7) est muni de rayons (10 à 16) à la façon d'une roue, caractérisé par le fait que les rayons sont reliés entre eux par des segments d'anneau (19, 20) et que les corps d'espacement (38) sont tendus vis-à-vis les segments d'anneau (19, 20).

20. Appareil selon la revendication 19, caractérisé par le fait que les rayons (10 à 16) sont fixés intérieurement de façon détachable à des brides (4, 5) de l'arbre (2).

21. Appareil selon l'une des revendications 14 à 20, caractérisé par le fait que chaque élément frontal (6, 7) est divisible (voir 21 à 23) parallèlement à l'axe longitudinal (3) du lit immergé (1).

22. Appareil selon l'une des revendications 14 à 21, caractérisé par le fait que les parois intérieures (43) des chambres de conversion (42) sont disposées avec un espacement radial relativement à l'arbre (2).

# Fig.1

0 076 977

Fig.2

2

0 076 977

Fig.4

Fig.3

Fig.5

# Fig. 6

37

# Fig.7

Fig.8

48

41

40

33

42

40

41

33

48

40

Fig.9

63

33

41

42

51

62

63

33

44

62

Fig.10

# Fig.11

# Fig.12